# EUROPÄISCHE PATENTSCHRIFT

(11) **EP 1 012 493 B1**
(45) Veröffentlichungstag und Bekanntmachung des Hinweises auf die Patenterteilung: **14.08.2002**
(21) Anmeldenummer: 98941141.8
(22) Anmeldetag: 09.09.1998
(51) Int. Cl.: F16H 47/04

(54) **HYDROSTATISCH-MECHANISCHES LEISTUNGSVERZWEIGUNGSGETRIEBE MIT VIER BEREICHEN**
HYDROSTATIC MECHANICAL TORQUE DIVIDER TRANSMISSION WITH FOUR AREAS
TRANSMISSION DE DERIVATION DE PUISSANCE MECANIQUE-HYDROSTATIQUE A QUATRE ZONES

(30) Priorität: 09.09.1997 AT 150897
(43) Veröffentlichungstag der Anmeldung: 28.06.2000
(73) Patentinhaber: ZF FRIEDRICHSHAFEN Aktiengesellschaft, 88038 Friedrichshafen (DE)
(72) Erfinder: WÖNTNER, Gebhard, A-4493 Wolfern (AT); GLASSNER, Rudolf, A-3623 Kottes (AT)
(86) Internationale Anmeldenummer: AT9800212
(87) Internationale Veröffentlichungsnummer: WO9913245

(56) Entgegenhaltungen:
- DE-A- 19 527 754

## Beschreibung

Die Erfindung handelt von einem Leistungsverzweigungsgetriebe, bestehend aus einer verstellbaren Hydrostateinheit, aus einem fünfwelligen Summierungsgetriebe mit einer ersten, einer zweiten und einer dritten Ausgangswelle, und aus einem Bereichsgetriebe, wobei die Bereichsschaltungen durch Schalten von Kupplungen vorgenommen werden.

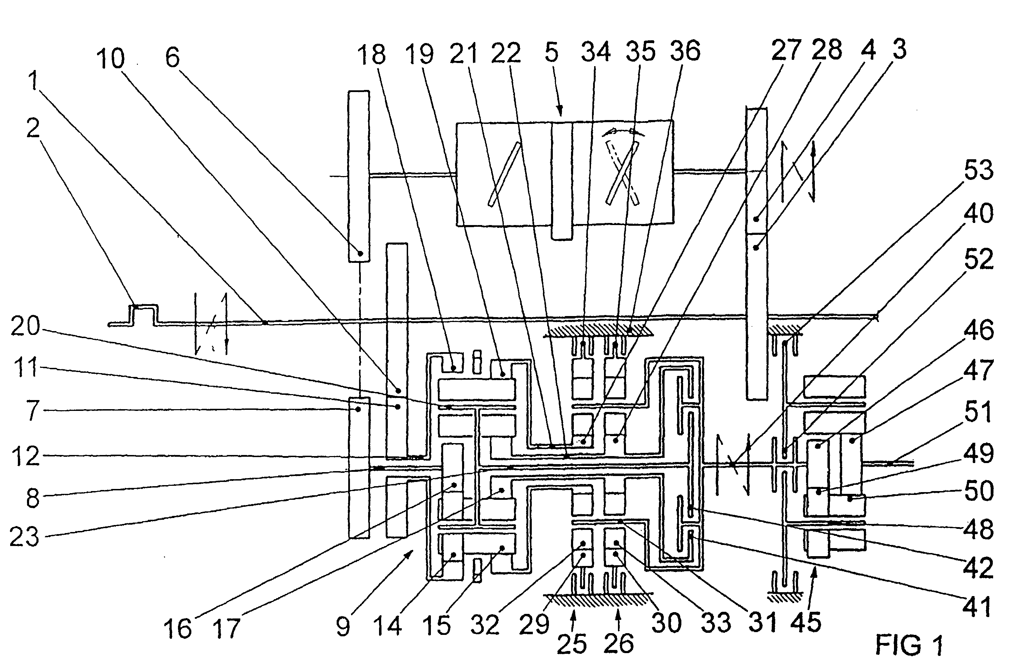

Ein gattungsgemäßes Leistungsverzweigungsgetriebe mit fünfwelligem Summierungsgetriebe ist etwa aus Fig.9 der DE 41 06 746 A1 bekannt. Zwei der drei Ausgangswellen sind jeweils über eine Kupplung mit einer Kupplungswelle verbindbar. Diese zwei Kupplungen - und zwei weitere - zwischen rotierenden Teilen erfordern eine Druckmittelzufuhr über eine Welle, die noch dazu eine Hohlwelle ist. Insgesamt sind sogar sechs Kupplungen erforderlich, was nicht nur den konstruktiven Aufwand erhoht, sondern auch die Steuerung verkompliziert. Die Kupplungswelle ist in ihrer funktionsbedingten Form überdies für die kostengünstige Serienfertigung ungeeignet und das mit der ersten Kupplung verbundene Hohlrad des Summierungsgetriebes ist nur durch die Planetenräder geführt, was unzureichend ist und zu erhöhter Abnutzung bzw schlechtem Greifen der Kupplung führt.

Nachteilig ist weiters, daß die für bestimmte Einsatzfälle (zB. bei Traktoren) erforderliche Zugkraft bzw Drehzahl nicht erreichbar ist und daß die Schaltzeit im Shuttle-Betrieb (abwechselnd vorwärts und rückwärts) wegen der Massenträgheiten im Bereichsgetriebe und wegen der Zahl der involvierten Kupplungen zu hoch ist.

Es ist somit Ziel der Erfindung, ein Leistungsverzweigungsgetriebe vorzuschlagen, das diese Nachteile nicht aufweist, es soll leichter zu fertigen und zu steuern sein.

Erfindungsgemäß wird das dadurch erreicht, daß
a) das Bereichsgetriebe aus einer an das Summierungsgetriebe anschließenden ersten und einer zweiten Planetenstufe besteht,
b) die erste Planetenstufe ein Sonnenrad, ein Hohlrad und einen Steg mit ersten Planetenrädern aufweist, wobei das Sonnenrad direkt mit der ersten Ausgangswelle antriebsverbunden und das Hohlrad mittels einer ersten Kupplung mit dem Gehäuse verbindbar ist,
c) die zweite Planetenstufe ein Sonnenrad, ein Hohlrad und einen Steg mit zweiten Planetenrädern aufweist, wobei das Sonnenrad direkt mit der zweiten Ausgangswelle antriebsverbunden und das Hohlrad mittels einer zweiten Kupplung mit dem Gehause verbindbar ist,
d) die dritte Ausgangswelle mittels einer dritten Kupplung mit einer Abtriebswelle verbindbar ist,
e) der Steg den beiden Planetenstufen gemeinsam und mit der Abtriebswelle dauernd fest verbunden ist, und
f) die zweite Ausgangswelle über eine vierte Kupplung mit der Abtriebswelle verbindbar ist.

Die Kupplungen für die zwei der drei Ausgangswellen des Summierungsgetriebes, die eine Druckmittelzufuhr durch die Welle erfordern, sind damit durch zwei im Kraftfluß stromabwärts liegende Kupplungen mit dem raumfesten Gehäuse er-5 setzt. Zwischen dem Summierungsgetriebe und dem Bereichsgetriebe gibt es keine Kupplungen mehr. Dadurch ist die ganze Konstruktion wesentlich vereinfacht, weniger Kupplungen, weniger Dreheinführungen für Druckmedium, kein unzentriertes Hohlrad, keine für die Serienfertigung ungeeigneten Teile 0 mehr. Durch die geringere Anzahl Kupplungen ist auch das Steuerverhalten besser und die geänderte Disposition erlaubt besser angepasste Bereichsgrenzen und damit auch bessere Anpassung an extreme Betriebsbedingungen.

In einer besonders vorteilhaften Ausführungsform weisen die beiden Planetenstufen gleiche Standübersetzungen auf (Anspruch 2). Das macht es nicht nur möglich, viele Teile als Gleichteile auszulegen, sondern verhilft auch zu einer besseren Lage der Synchrondrehzahlen für die Bereichsschaltungen.

Die erfindungsgemäße Lösung ist für die verschiedensten Ausführungsformen des fünfwelligen Summierungsgetriebes geeignet. Geeignete Mehrfachplanetengetriebe in verschiedenen Anordnungen sind etwa in der DE 41 06 746 beschrieben. In einer besonders raumsparenden und auslegungsflexiblen Ausführungsform weist das fünfwellige Summierungsgetriebe einen Steg mit jeweils miteinander kämmenden ersten und zweiten Planetenrädern sowie jeweils mit den einen oder anderen Planetenrädern kämmende Sonnenräder und Hohlräder auf, wobei das mit den zweiten Planetenrädern kämmende Hohlrad mit der ersten Ausgangswelle, das mit den zweiten Planetenrädern kämmende Sonnenrad mit der zweiten Ausgangswelle und der Steg mit der dritten Ausgangswelle verbunden sind (Anspruch 3). Damit wird auch eine besonders einfache Anbindung der Sonnenräder der beiden Planetenstufen erreicht.

In einer für die Verwendung des Getriebes bei Traktoren besonders geeigneten Ausführungsform führt die Abtriebswelle zu einem Wendegetriebe (Anspruch 4). Auf diese Weise ist das Wendegetriebe nachgeschaltet, wobei es ein eigenes Gehäuse besitzen oder das Gehäuse mit dem Leistungsverzweigungsgetriebe teilen kann. Dabei ist die Zahl der Rückwärtsgänge ohne zusätzlichem Bauaufwand gleich der der Vorwärtsgänge. Das bringt erhebliche bauliche Vereinfachung und große Vorteile im Shuttle-Betrieb, besonders, wenn das Wendegetriebe ein Planetengetriebe ist (Anspruch 5).

Eine besonders billige und robuste Bauweise des Wendegetriebes wird erreicht, wenn es ein Eingangssonnenrad, ein Ausgangssonnenrad und einen Steg mit miteinander kämmenden ersten und zweiten planetenrädern aufweist, wobei die ersten Planetenräder mit dem Eingangssonnenrad und die zweiten Planetenräder mit dem Ausgangssonnenrad kämmen und der Steg wahlweise über eine Vorwärtskupplung mit dem Eingangssonnenrad oder über eine Rückwärtskupplung mit dem Gehäuse verbindbar ist (Anspruch 6). Zum Unterschied von den bekannten Planeten-Wendegecrieben, bei denen ein in der Fertigung teures Hohlrad vorhanden ist und eingebremst werden muß, ist es bei dieser Bauweise der Steg, der eingebremst wird; Hohlrad ist keines vorhanden. Dadurch ist die Planetendrehzahl wesentlich geringer, was der Lebensdauer zugute kommt.

Alle in dem erfindungsgemäßen Leistungsverzweigungsgetriebe verwendeten Kupplungen konnen prinzipiell beliebiger Art sein, insbesondere auch Reibungskupplungen. Hinsichtlich Steuerung und Raumökonomie sind jedoch formschlüssige Kupplungen mit besonderem Vorteil anwendbar (Anspruch 7).

Im Folgenden wird die Erfindung anhand von einer einzigen Figur beschrieben und erläutert.

Die Motorwelle 1 eines erfindungsgemäßen Getriebes wird von einem Motor 2 angetrieben, der hier als Verbrennungsmotor angedeutet ist. Die Motorwelle treibt über Zahnräder 3,4 eine Hydrostateinheit 5, die aus einer verstellbaren und aus einer nicht verstellbaren Motor/Pumpe-Einheit besteht, und über Zahnräder 6,7 eine erste Eingangswelle 8 eines Summierungsgetriebes 9. Ebenso treibt die Motorwelle 1 über Zahnräder 10,11 eine zweite Eingangswelle 12 des Summierungsgetriebes 9.

Das Summierungsgetriebe 9 ist ein fünfwelliges Planetengetriebe, mit ersten Planetenrädern 14 und zweiten Planetenrädern 15, die jeweils miteinander kämmen, mit einem ersten Sonnenrad 16 auf der ersten Eingangswelle 8 und einem zweiten Sonnenrad 17, weiters von einem mit dem Zahnrad 11 antriebsverbundenen ersten Hohlrad 18 und einem zweiten Hohlrad 19 und schließlich mit einem Steg 20. Eine Ausgangswelle 21 ist mit dem zweiten Hohlrad 19 verbunden, eine zweite Ausgangswelle 22 mit dem zweiten Sonnenrad 17 und eine dritte Ausgangswelle 23 mit dem Steg 20.

Die drei Ausgangswellen 21,22,23 werden in ein Bereichsgetriebe geführt, das aus einer ersten Planetenstufe 25 und einer zweiten Planetenstufe 26 besteht. Entsprechend ist ein Sonnenrad 27 der ersten Planetenstufe und ein Sonnenrad 28 der zweiten Planetenstufe, ein Hohlrad 29 der ersten Planetenstufe und ein Hohlrad 30 der zweiten Planetenstufe, Planetenräder 32 der ersten Stufe und Planetenräder 33 der zweiten Stufe sowie ein gemeinsamer Steg 31 vorhanden. Die Hohlräder 29 bzw. 30 sind mittels einer ersten Kupplung 34 bzw. einer zweiten Kupplung 35 mit dem feststehenden Gehäuse 36 oder einem mit dem Gehäuse fest verbundenen Teil kuppelbar. Das Sonnenrad 27 der ersten Planetenstufe ist mit der ersten Ausgangswelle 21 des Summierungsgetriebes 9 verbunden rund das Sonnenrad 28 der zweiten Planetenstufe mit der zweiten Ausgangswelle 22. Die dritte Ausgangswelle 23 ist einfach durch die Planetenstufen hindurchgeführt.

Der beiden Planetenstufen 25,26 gemeinsame Steg 31 ist unter Bildung eines Kupplungsteiles mit einer Abtriebswelle 40 verbunden. Dieser Kupplungsteil gehört zu einer dritten Kupplung 42 und einer vierten Kupplung 41, wobei die zweite Abtriebswelle 22 mittels der vierten Kupplung 41 mit der Abtriebswelle 40, und die dritte Ausgangswelle 23 mittels der dritten Kupplung 42 mit der Abtriebswelle verbindbar sind.

Der Abtriebswelle 40 ist noch ein Wendegetriebe 45 nachgeordnet. Es besteht aus einem Eingangssonnenrad 46, einem Ausgangssonnenrad 47, einem Steg 48, ersten Planetenrädern 49, zweiten Planetenrädern 50 und einer Endwelle 51, die beispielsweise zu dem nicht dargestellten Achsantrieb eines Fahrzeuges führt. Es handelt sich somit um ein Planetengetriebe ohne Hohlrad. Der Steg 48 dieses Wendegetriebes 45 )ist entweder mittels einer Vorwärtskupplung 52 mit dem Eingangssonnenrad, oder mittels einer Rückwärtskupplung 53 mit dem Gehäuse kuppelbar.

Die Arbeitsweise des Getriebes ist die folgende: im Summierungsgetriebe 9 wird der Bewegung der ersten Eingangswelle die mittels der Hydrostateinheit 5 variable Bewegung der zweiten Eingangswelle 12 überlagere. Die dabei entstehende Bewegung kann über eine der drei Ausgangswellen 21,22,23 abgenommen werden. Paare dieser laufen in gewissen Betriebspunkten synchron, sodaß durch Betätigen der Kupplungen 34,35,41,42 von einem Bereich in den anderen geschaltet werden kann. Im ersten Bereich ist die erste Kupplung 34 geschlossen, wodurch der Steg 31 mit noch kleinerer Drehzahl als das bereits sehr langsam umlaufende Sonnenrad der ersten Stufe 27 angetrieben wird.

In den zweiten Bereich gelangt man durch Öffnen der ersten Kupplung 34 und Schließen der zweiten Kupplung 35. Da sich das Sonnenrad der zweiten Stufe schneller dreht, wird auch der Steg 31 und mit ihm die Abtriebswelle 40 schneller bewegt.

In den dritten Bereich gelangt man durch Öffnen der Kupplung 35 und Schließen der dritten Kupplung 42. Nun treibt die dritte Ausgangswelle 23 ohne Zwischenschaltung eine der beiden Planetenstufen 25,26 des Bereichsgetriebes direkt die Abtriebswelle 40.

Durch Öffnen der dritten Kupplung 42 und Schließen der vierten Kupplung 41 gelangt man in den vierten Bereich, in dem die zweite Ausgangswelle 22 des Summierungsgetriebes direkt die Abtriebswelle 40 treibt.

So vorhanden, ist im nachgeschalteten Wendegetriebe 45 entweder die Vorwärtskupplung 52 oder die Rückwärtskupplung 53 geschlossen. Im ersten Fall ist der Steg 48 mit dem Eingangssonnenrad 46 fest verbunden, sodaß das Getriebe als Block und somit reibungsfrei umläuft. Soll im Shuttle-Betrieb auf Rückwärtsfahrt umgeschaltet werden, so wird die Vorwärtskupplung 52 geöffnet und die Rückwärtskupplung 53 geschlossen. Dadurch wird der Steg 48 festgesetzt, wobei im Getriebe nur die Trägheit des Steges mit seinen Planetenrädern 49/50 zu überwinden ist. Die Endwelle 51 dreht sich im entgegengesetzten Drehsinn mit derselben Drehzahl.

## Patentansprüche

1. Leistungsverzweigungsgetriebe, bestehend aus einer verstellbaren Hydrostateinheit (5), aus einem fünfwelligen Summierungsgetriebe (9) mit einer ersten (21), einer zweiten (22) und einer dritten (23) Ausgangswelle, und aus einem Bereichsgetriebe, wobei die Bereichsschaltungen durch Schalten von Kupplungen vorgenommen werden, **dadurch gekennzeichnet, daß**
a) das Bereichsgetriebe (25,26) aus einer an das Summierungsgetriebe (9) anschließenden ersten (25) und einer zweiten (26) Planetenstufe besteht,
b) die erste Planetenstufe (25) ein Sonnenrad (27), ein Hohlrad (29) und einen Steg (31) mit ersten Planetenrädern (32) aufweist, wobei das Sonnenrad (27) direkt mit der ersten Ausgangswelle (21) antriebsverbunden und das Hohlrad (29) mittels einer ersten Kupplung (34) mit dem Gehäuse (36) verbindbar ist,
c) die zweite Planetenstufe (26) ein Sonnenrad (28), ein Hohlrad (30) und einen Steg (31) mit zweiten Planetenrädern(33) aufweist, wobei das Sonnenrad (28) direkt mit der zweiten Ausgangswelle (22) antriebsverbunden und das Hohlrad (30) mittels einer zweiten Kupplung (35) mit dem Gehäuse (36) verbindbar ist,
d) die dritte Ausgangswelle (23) mittels einer dritten Kupplung (41) mit einer Abtriebswelle (40) verbindbar ist,
e) der Steg (31) den beiden Planetenstufen (25,26) gemeinsam und mit der Abtriebswelle (40) dauernd fest verbunden ist, und
f) die zweite Ausgangswelle (22) über eine vierte Kupplung (41) mit der Abtriebswelle (40) verbindbar ist.

2. Leistungsverzweigungsgetriebe nach Anspruch 1, **dadurch gekennzeichnet, daß** die Planetenstufen (25,26) gleiche Standübersetzungen aufweisen.

3. Leistungsverzweigungsgetriebe nach Anspruch 1, **dadurch gekennzeichnet, daß** das funfwellige Summierungsgetriebe (9) einen Steg (20) mit jeweils miteinander kämmenden ersten (14) und zweiten (15) Planetenrädern (14,15) sowie jeweils mit den einen oder anderen Planetenrädern (14,15) kämmende erste und zweite Sonnenräder (16,17) und erste und zweite Hohlräder (18,19) aufweist, wobei das mit den zweiten Planetenrädern (15) kämmende zweite Hohlrad (19) mit der ersten Ausgangswelle (21), das mit den zweiten Planetenrädern (15) kämmende zweite Sonnenrad (17) mit der zweiten Ausgangswelle (22) und der Steg (20) mit der dritten Ausgangswelle (23) verbunden sind.

4. Leistungsverzweigungsgetriebe nach Anspruch 1, **dadurch gekennzeichnet, daß** die Abtriebswelle (40) zu einem Wendegetriebe (45) führt.

5. Leistungsverzweigungsgetriebe nach Anspruch 4, **dadurch gekennzeichnet, daß** das Wendegetriebe (45) ein Planetengetriebe ist.

6. Leistungsverzweigungsgetriebe nach Anspruch 5, **dadurch gekennzeichnet, daß** das Wendegetriebe(45) ein Eingangssonnenrad (46), ein Ausgangssonnenrad (47) und einen Steg (48) mit miteinander kämmenden ersten und zweiten Planetenrädern (49,50) aufweist, wobei die ersten Planetenräder (49) mit )dem Eingangssonnenrad (46) und die zweiten Planetenräder (50) mit dem Ausgangssonnenrad (47) kämmen und der Steg (48) wahlweise über eine Vorwärrskupplung (52) mit dem Eingangssonnenrad oder über eine Rückwärtskupplung (53) mit dem Gehäuse (36) verbindbar ist.

7. Leistungsverzweigungsgetriebe nach einem der vorhergehenden Ansprüche, **dadurch gekennzeichnet, daß** die Kupplungen (34,35, 41,42) formschlüssige Kupplungen sind.

## Claims

1. Power distribution transmission, comprising an adjustable hydrostatic unit (5), a five-shaft summarizing gearbox (9) having a first (21), second (22) and third (23) output shaft, and a range gearbox, wherein the range selections are effected by operating clutches, **characterized in that**
a) the range gearbox (25, 26) comprises a first planetary step (25), which adjoins the summarizing gearbox (9), and a second planetary step (26),
b) the first planetary step (25) comprises a sun wheel (27), a ring gear (29) and a web (31) having first planet wheels (32), wherein the sun wheel (27) is drive-connected directly to the first output shaft (21) and the ring gear (29) is connectable by means of a first clutch (34) to the housing (36),
c) the second planetary step (26) comprises a sun wheel (28), a ring gear (30) and a web (31) having second planet wheels (33), wherein the sun wheel (28) is drive-connected directly to the second output shaft (22) and the ring gear (30) is connectable by means of a second clutch (35) to the housing (36),
d) the third output shaft (23) is connectable by means of a third clutch (41) to a driven shaft (40),
e) the web (31) is common to the two planetary steps (25, 26) and is permanently connected in a fixed manner to the driven shaft (40), and
f) the second output shaft (22) is connectable by a fourth clutch (41) to the driven shaft (40).

2. Power distribution transmission according to claim 1, **characterized in that** the planetary steps (25, 26) have identical static ratios.

3. Power distribution transmission according to claim 1, **characterized in that** the five-shaft summarizing gearbox (9) comprises a web (20) having in each case mutually meshing first (14) and second (15) planet wheels (14, 15) as well as first and second sun wheels (16, 17) and first and second ring gears (18, 19) meshing in each case with the one or the other planet wheels (14, 15), wherein the second ring gear (19) meshing with the second planet wheels (15) is connected to the first output shaft (21), the second sun wheel (17) meshing with the second planet wheels (15) is connected to the second output shaft (22), and the web (20) is connected to the third output shaft (23).

4. Power distribution transmission according to claim 1, **characterized in that** the driven shaft (40) leads to a reversing gearbox (45).

5. Power distribution transmission according to claim 4, **characterized in that** the reversing gearbox (45) is a planetary gear.

6. Power distribution transmission according to claim 5, **characterized in that** the reversing gearbox (45) comprises an input sun wheel (46), an output sun wheel (47) and a web (48) having mutually meshing first and second planet wheels (49, 50), wherein the first planet wheels (49) mesh with the input sun wheel (46) and the second planet wheels (50) mesh with the output sun wheel (47) and the web (48) is connectable selectively by a forward clutch (52) to the input sun wheel or by a reverse clutch (53) to the housing (36).

7. Power distribution transmission according to one of the preceding claims, **characterized in that** the clutches (34, 35, 41, 42) are positive engagement clutches.

## Revendications

1. Transmission à ramification de puissance composée d'une unité hydrostatique (5), d'une transmission de sommation à cinq arbres (19) qui comprend un premier arbre de sortie (21), un deuxième arbre de sortie (22) et un troisième arbre de sortie (23), ainsi qu'une transmission à gamme, les commutations de gamme étant réalisées par la manoeuvre d'embrayages **caractérisée en ce que**
a) la transmission à gamme (25, 26) est composée d'un premier étage épicycloïdal (25) qui fait suite à la transmission de sommation (9), et d'un deuxième étage épicycloïdal (26),
b) le premier étage épicycloïdal (25) comprend une roue planétaire (27), une couronne à denture intérieure (29) et un porte-satellites (31) qui porte des premiers pignons satellites (32), la roue planétaire (27) étant directement reliée cinématiquement au premier arbre de sortie (21) et la roue à denture intérieure (29) pouvant être reliée au carters (36) au moyen d'un premier embrayage (34),
c) le deuxième étage épicycloïdal (26) comprend une roue planétaire (28), une couronne à denture intérieure (30) et un porte-satellites (31) qui porte des seconds pignons satellites (33), la roue planétaire (28) étant directement reliée cinématiquement au deuxième arbre de sortie (22) et la couronne à denture intérieure (30) pouvant être reliée au carter (36) au moyen d'un deuxième embrayage (35),
d) le troisième arbre de sortie (23) peut être relié à un arbre de prise de force (40) au moyen d'un troisième embrayage (41),
e) le porte-satellites (31) est commun au deux étages épicycloïdaux (25, 26) et il est relié solidairement à l'arbre de prise de force (40) en permanence, et
f) le deuxième arbre de sortie (22) peut être relié à l'arbre de prise de force (40) par l'intermédiaire d'un quatrième embrayage (41).

2. Transmission à ramification de puissance selon la revendication 1, **caractérisée en ce que** les trains épicycloïdaux (25, 26) comportent les mêmes rapports de transmission fixes.

3. Transmission à ramification de puissance selon la revendication 1, **caractérisée en ce que** la transmission de sommation à cinq arbres (9) comprend un porte-satellites (20) qui porte des premiers pignons satellites (14) et des deuxièmes pignons satellites (15) qui engrènent entre eux, ainsi que des premières et des deuxièmes roues planétaires (16, 17) qui engrènent respectivement avec les uns ou les autres pignons satellites (14, 15), et des premières et deuxièmes couronnes à denture intérieure (18, 19), la deuxième couronne à denture intérieure (19) qui engrène avec les deuxièmes pignons satellites (15) étant reliée au premier arbre de sortie (21), la deuxième roue planétaire (17) qui engrène avec les deuxièmes pignons satellites (15) étant reliée au deuxième arbre de sortie (22) et le porte-satellites (20) étant relié au troisième arbre de sortie (23).

4. Transmission à ramification de puissance selon la revendication 1, **caractérisée en ce que** l'arbre de prise de force (40) mène à une transmission de renversement du sens de marche (45).

5. Transmission à ramification de puissance selon la revendication 4, **caractérisée en ce que** la transmission de renversement du sens de marche (45) est une transmission épicycloïdale.

6. Transmission à ramification de la puissance selon la revendication 5, **caractérisée en ce que** la transmission de renversement du sens de marche (45) comprend une roue planétaire d'entrée (46), une roue planétaire de sortie (47) et un porte-satellites (48) qui porte des premiers et deuxièmes pignons satellites (49, 50) qui engrènent entre eux, les premiers pignons satellites (49) engrenant avec la roue planétaire d'entrée (46) et les deuxièmes pignons satellites (50) engrenant avec la roue planétaire de sortie (47), et le porte-satellites (48) pouvant être relié sélectivement à la roue planétaire d'entrée par un embrayage de marche avant (52) ou au carter (36) par l'intermédiaire d'un embrayage de marche arrière (53).

7. Transmission à ramification de puissance selon l'une des revendications précédentes, **caractérisée en ce que** les embrayages (34, 35, 41, 42) sont des embrayages opérant par complémentarité de forme.
